# EUROPEAN PATENT APPLICATION

(11) **EP 4 686 247 A1**
(43) Date of publication of application: **28.01.2026**
(21) Application number: 24787899.4
(22) Date of filing: 25.03.2024
(51) Int. Cl.: H04W 16/10

(54) **COMMUNICATION METHOD AND COMMUNICATION APPARATUS**

(30) Priority: 14.04.2023 CN 202310418023
(71) Applicant: Huawei Technologies Co., Ltd., Shenzhen, Guangdong 518129 (CN)
(72) Inventor: DING, Hui, Shenzhen, Guangdong 518129 (CN); SHEN, Yang, Shenzhen, Guangdong 518129 (CN)
(74) Representative: Grünecker Patent- und Rechtsanwälte PartG mbB
(86) International application number: PCT/CN2024/083514
(87) International publication number: WO 2024/212793

(57) **Abstract**

Embodiments of this application provide a communication method and a communication apparatus. The method includes: A first network element obtains first information and second information, where the first information includes subscription information of a first service and/or policy information of the first service, the second information indicates that the first service supports being managed by the first network element, the first information is from a second network element, the second information is from a third network element, the second network element is a network element at a subscription location in which a terminal device subscribes to the first service, and the third network element is a home data storage network element of the terminal device. The first network element determines a policy decision result based on the first information and the second information, where the policy decision result is used by the terminal device to access the first service in a first region, a mapping relationship exists between the first region and the first network element, and the first network element is a network element at the subscription location in which the terminal device subscribes to the first service. Because the policy decision result is determined by the first network element of a subscription location in which the terminal device subscribes to the first service, the first service can be managed more effectively.

## Description

This application claims priority to Chinese Patent Application No. 202310418023.3, filed with the China National Intellectual Property Administration on April 14, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication method.

### BACKGROUND

With evolution of a network service mode, in addition to subscribing to a public network service, a terminal device may further subscribe to a campus service for a specific region, for example, a guide service provided in a park or a museum for the park or the museum.

In a roaming scenario, the terminal device is located at a visited location, and subscription information of the terminal device is located at a home location. How to manage the campus service of the terminal device becomes an urgent problem to be resolved.

### SUMMARY

This application provides a communication method and a communication method, to manage a campus service more effectively.

According to a first aspect, a communication method is provided. The method may be performed by a first network element, or may be performed by a component (for example, a module, a circuit, a chip, or a chip system) disposed in the first network element. This is not limited in this application. For ease of description, an example in which the method is performed by the first network element is used below for description.

The method includes: A first network element obtains first information and second information, where the first information includes subscription information of a first service and/or policy information of the first service, the second information indicates that the first service supports being managed by the first network element, the first information is from a second network element, the second information is from a third network element, the second network element is a network element at a subscription location in which a terminal device subscribes to the first service, and the third network element is a home data storage network element of the terminal device. The first network element determines a policy decision result based on the first information and the second information, where the policy decision result is used by the terminal device to access the first service in a first region, a mapping relationship exists between the first region and the first network element, and the first network element is a network element at the subscription location in which the terminal device subscribes to the first service.

Based on the foregoing solution, the first network element may obtain the first information from the second network element, obtain the second information from the third network element, and determine the policy decision result of the terminal device based on the first information and the second information. Because the policy decision result is determined by the first network element at a subscription location in which the terminal device subscribes to the first service, the network element at the subscription location may manage the first service. In this way, load of a home network element can be reduced, and a delay for which the terminal device accesses the first service can be reduced. In addition, because the first network element determines the policy decision result based on authorization of the home data storage network element of the terminal device, the first network element can prevent the first network element from offloading, at an access location, some or all services, to ensure communication security.

In conclusion, the solution of this application can manage the first service more effectively.

Optionally, the first service may also be referred to as a campus service.

Optionally, that the first network element obtains the first information and the second information includes: The first network element receives the first information from the second network element, and receives the second information from the third network element.

With reference to the first aspect, in some implementations of the first aspect, the first information includes the subscription information, and that the first network element determines a policy decision result based on the first information and the second information includes: The first network element determines, based on the subscription information, that the terminal device subscribes to the first service. The first network element determines, based on the second information, that the first service supports being managed by the first network element, and determines the policy decision result based on the second information.

With reference to the first aspect, in some implementations of the first aspect, the first information includes the policy information, and that the first network element determines a policy decision result based on the first information and the second information includes: The first network element determines, based on the second information, that the first service supports being managed by the first network element. The first network element determines the policy decision result based on the policy information.

With reference to the first aspect, in some implementations of the first aspect, the first information includes the subscription information and the policy information, and that the first network element determines a policy decision result based on the first information and the second information includes: The first network element determines, based on the subscription information, that the terminal device subscribes to the first service. The first network element determines, based on the second information, that the first service supports being managed by the first network element. The first network element determines the policy decision result based on the policy information.

For example, a granularity of the subscription information is any one of the following: a terminal granularity, a region granularity, a data network name DNN granularity, a single network slice selection assistance information S-NSSAI granularity, or a service granularity.

For example, the policy information includes at least one of the following: an access and mobility management policy, a session management policy, or a terminal device policy.

With reference to the first aspect, in some implementations of the first aspect, the method further includes: The first network element sends third information to the third network element, where the third information is used for requesting service authorization information, and the service authorization information indicates a service that supports being managed by the first network element. That the first network element receives the second information includes: The first network element receives the service authorization information from the third network element, where the service authorization information includes the second information.

Based on the foregoing solution, the service authorization information may be uniformly managed by the home data storage network element of the terminal device, so that communication security of the terminal device can be ensured.

For example, the service authorization information is at least one of the following: an identifier of the service that supports being managed by the first network element, an authorization indication of the service that supports being managed by the first network element, or network information corresponding to the service that supports being managed by the first network element.

Optionally, the first region includes a plurality of regions at different geographical locations.

Optionally, the policy decision result is further used by the terminal device for transmission of data of the first service in the first region.

With reference to the first aspect, in some implementations of the first aspect, the method further includes: The first network element sends sixth information to a fifth network element, where the sixth information indicates that the first network element is configured to manage the first service of the terminal device, and the fifth network element is configured to store an association relationship between the terminal device and the first network element.

For example, the fifth network element is a binding support function network element or the third network element.

According to a second aspect, a communication method is provided. The method may be performed by a fourth network element, or may be performed by a component (for example, a module, a circuit, a chip, or a chip system) disposed in the fourth network element. This is not limited in this application.

The method includes: receiving fourth information from an application function, where the fourth information includes region information, and subscription information and/or policy information of a plurality of services, the region information includes a first region, the plurality of services include a first service, the first service is a service a terminal device accesses in the first region, a mapping relationship exists between the first region and a first network element, and the first network element is a network element at a subscription location in which the terminal device subscribes to the first service; and sending first information to the first network element based on the mapping relationship, where the first information includes subscription information and/or policy information of the first service.

Based on the foregoing solution, the fourth network element delivers subscription information and/or policy information of a plurality of first services to first network elements that manage the services, so that each first network element can determine a corresponding policy decision result, and the network element at the subscription location may manage the first service. This can reduce load of a home network element, and can reduce a delay for which the terminal device accesses the first service.

With reference to the second aspect, in some implementations of the second aspect, the method further includes: sending fifth information to a network repository function, where the fifth information is used for requesting the mapping relationship.

Optionally, the mapping relationship is preconfigured information.

According to a third aspect, a communication method is provided. The method includes: An application function sends fourth information to a fourth network element, where the fourth information includes region information, and subscription information and/or policy information of a plurality of services, the region information includes a first region, the plurality of services include a first service, the first service is a service a terminal device accesses in the first region, a mapping relationship exists between the first region and a first network element, and the first network element is a network element at a subscription location in which the terminal device subscribes to the first service. The fourth network element sends first information to the first network element based on the mapping relationship, where the first information includes subscription information and/or policy information of the first service. A third network element sends second information to the first network element, where the second information indicates that the first service supports being managed by the first network element, and the third network element is a home data storage network element of the terminal device. The first network element determines a policy decision result based on the first information and the second information, where the policy decision result is used by the terminal device to access the first service in the first region, a mapping relationship exists between the first region and the first network element, and the first network element is a network element at the subscription location in which the terminal device subscribes to the first service.

According to a fourth aspect, a communication apparatus is provided. The apparatus may be a first network element, or may be a component (for example, a module, a circuit, a chip, or a chip system) disposed in the first network element. This is not limited in this application.

The apparatus includes: a transceiver unit, configured to obtain first information and second information, where the first information includes subscription information of a first service and/or policy information of the first service, the second information indicates that the first service supports being managed by the communication apparatus, the first information is from a second network element, the second information is from a third network element, the second network element is a network element at a subscription location in which the terminal device subscribes to the first service, and the third network element is a home data storage network element of the terminal device; and a processing unit, configured to determine a policy decision result based on the first information and the second information, where the policy decision result is used by the terminal device to access the first service in a first region, a mapping relationship exists between the first region and the communication apparatus, and the communication apparatus is a network element at the subscription location in which the terminal device subscribes to the first service.

Optionally, the transceiver unit is specifically configured to: receive the first information from the second network element; and receive the second information from the third network element.

With reference to the fourth aspect, in some implementations of the fourth aspect, the first information includes the subscription information. The processing unit is specifically configured to determine, based on the subscription information, that the terminal device subscribes to the first service; and determine, based on the second information, that the first service supports being managed by the communication apparatus, and determine, based on the second information, the policy decision result.

With reference to the fourth aspect, in some implementations of the fourth aspect, the first information includes the policy information. The processing unit is specifically configured to determine, based on the second information, that the first service supports being managed by the communication apparatus; and determine the policy decision result based on the policy information.

With reference to the fourth aspect, in some implementations of the fourth aspect, the first information includes the subscription information and the policy information. The processing unit is specifically configured to determine, based on the subscription information, that the terminal device subscribes to the first service; determine, based on the second information, that the first service supports being managed by the communication apparatus; and determine the policy decision result based on the policy information.

For example, a granularity of the subscription information is any one of the following: a terminal granularity, a region granularity, a data network name DNN granularity, a single network slice selection assistance information S-NSSAI granularity, or a service granularity.

For example, the policy information includes at least one of the following: an access and mobility management policy, a session management policy, or a terminal device policy.

With reference to the fourth aspect, in some implementations of the fourth aspect, the transceiver unit is further configured to send third information to the third network element, where the third information is used for requesting service authorization information, and the service authorization information indicates a service that supports being managed by the communication apparatus. The transceiver unit is specifically configured to receive the service authorization information from the third network element, where the service authorization information includes the second information.

For example, the service authorization information is at least one of the following: an identifier of the service that supports being managed by the communication apparatus, an authorization indication of the service that supports being managed by the communication apparatus, or network information corresponding to the service that supports being managed by the communication apparatus.

Optionally, the first region includes a plurality of regions at different geographical locations.

Optionally, the policy decision result is further used by the terminal device for transmission of data of the first service in the first region.

With reference to the fourth aspect, in some implementations of the fourth aspect, the transceiver unit is further configured to send sixth information to a fifth network element, where the sixth information indicates that the communication apparatus is configured to manage the first service of the terminal device, and the fifth network element is configured to store an association relationship between the terminal device and the communication apparatus.

For example, the fifth network element is a binding support function network element or the third network element.

According to a fifth aspect, a communication apparatus is provided. The apparatus may be a fourth network element, or may be a component (for example, a module, a circuit, a chip, or a chip system) disposed in the fourth network element. This is not limited in this application.

The communication apparatus includes: a transceiver unit, configured to receive fourth information from an application function, where the fourth information includes region information, and subscription information and/or policy information of a plurality of services, the region information includes a first region, the plurality of services include a first service, the first service is a service a terminal device accesses in the first region, a mapping relationship exists between the first region and a first network element, and the first network element is a network element at a subscription location in which the terminal device subscribes to the first service; and a processing unit, configured to send first information to the first network element based on the mapping relationship, where the first information includes subscription information and/or policy information of the first service.

With reference to the fifth aspect, in some implementations of the fifth aspect, the transceiver unit is further configured to send fifth information to a network repository function, where the fifth information is used for requesting the mapping relationship.

According to a sixth aspect, a communication system is provided. The system includes: an application function, configured to send fourth information to a fourth network element, where the fourth information includes region information, and subscription information and/or policy information of a plurality of services, the region information includes a first region, the plurality of services include a first service, the first service is a service a terminal device accesses in the first region, a mapping relationship exists between the first region and a first network element, and the first network element is a network element at a subscription location in which the terminal device subscribes to the first service; the fourth network element, configured to send first information to the first network element based on the mapping relationship, where the first information includes subscription information and/or policy information of the first service; a third network element, configured to send second information to the first network element, where the second information indicates that the first service supports being managed by the first network element, and the third network element is a home data storage network element of the terminal device; and the first network element, configured to determine a policy decision result based on the first information and the second information, where the policy decision result is used by the terminal device to access the first service in the first region, a mapping relationship exists between the first region and the first network element, and the first network element is a network element at the subscription location in which the terminal device subscribes to the first service.

According to a seventh aspect, a communication apparatus is provided, including a transceiver and a processor. Optionally, the communication apparatus may further include a memory. The processor is configured to control the transceiver to send and receive a signal, the memory is configured to store a computer program, and the processor is configured to invoke the computer program from the memory and run the computer program, so that the communication apparatus performs the method according to any one of the first aspect or the second aspect and the possible implementations of the first aspect or the second aspect.

Optionally, there are one or more processors, and there are one or more memories.

Optionally, the memory may be integrated with the processor, or the memory and the processor are separately disposed.

Optionally, the communication apparatus further includes a transmitter machine (transmitter) and a receiver machine (receiver).

According to an eighth aspect, a communication system is provided, including at least two of the first network element, the second network element, the third network element, and the fourth network element.

According to a ninth aspect, a computer-readable storage medium is provided. The computer-readable storage medium stores a computer program or code. When the computer program or code is run on a computer, the computer is enabled to perform the method according to any one of the first aspect or the second aspect and the possible implementations of the first aspect or the second aspect.

According to a tenth aspect, a chip is provided, including at least one processor. The at least one processor is coupled to a memory, the memory is configured to store a computer program, and the processor is configured to invoke the computer program from the memory and run the computer program, to enable a terminal device on which the chip system is installed to perform the method according to any one of the first aspect or the second aspect and the possible implementations of the first aspect or the second aspect.

The chip may include an input circuit or interface configured to send information or data, and an output circuit or interface configured to receive information or data.

According to an eleventh aspect, a computer program product is provided. The computer program product includes computer program code, and when the computer program code is run by a terminal device, the terminal device is enabled to perform the method according to any one of the first aspect or the second aspect or the possible implementations of the first aspect or the second aspect.

### BRIEF DESCRIPTION OF DRAWINGS

FIG. 1 is a diagram of a network architecture to which an embodiment of this application is applicable;
FIG. 2 is a diagram of an architecture of home routed roaming;
FIG. 3 is a diagram of an architecture of local breakout roaming;
FIG. 4 is a diagram of an architecture of inter-province roaming;
FIG. 5 is another diagram of an architecture of inter-province roaming;
FIG. 6 shows a UL CL-based offloading architecture to which this application is applicable;
FIG. 7 is a schematic flowchart of a communication method according to an embodiment of this application;
FIG. 8 is another schematic flowchart of a communication method according to an embodiment of this application;
FIG. 9 is a diagram of a communication apparatus 1000 according to an embodiment of this application; and
FIG. 10 is a diagram of another communication apparatus 1100 according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

In a communication system, a network operated by an operator may be referred to as a public land mobile network (public land mobile network, PLMN), and may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network compliant with a requirement of the 3rd generation partnership project (3rd generation partnership project, 3GPP) standard, which is referred to as a 3GPP network for short. The 3GPP network usually includes but is not limited to a 5G network, a 4th generation (4th generation, 4G) network, and another future communication system, for example, a 6th generation (6th generation, 6G) network.

For ease of description, the 5G network is used as an example for description in embodiments of this application.

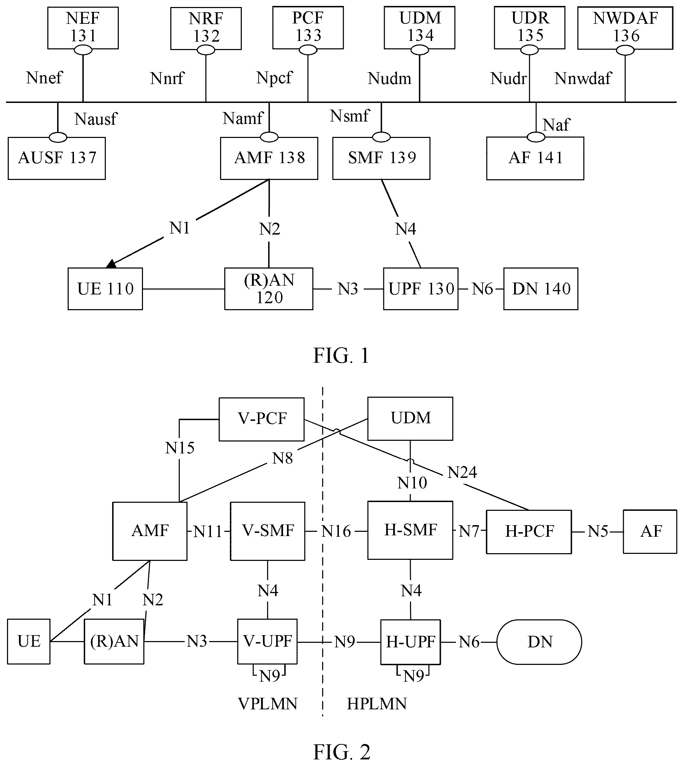

FIG. 1 is a diagram of a network architecture to which an embodiment of this application is applicable. As shown in FIG. 1, the network architecture may include three parts: a terminal device part, a data network (data network, DN) part, and an operator network PLMN part. The following briefly describes a function of a network element of each part.

The terminal device part may include a terminal device 110, and the terminal device 110 may also be referred to as user equipment (user equipment, UE). The terminal device 110 in this application is a device having a radio transceiver function, and may communicate with one or more core network (core network, CN) devices by using an access network device (which may also be referred to as an access device) in a radio access network (radio access network, RAN) 140. The terminal device 110 may also be referred to as an access terminal, a user, a terminal, a subscriber unit, a subscriber station, a mobile station, a remote station, a remote terminal, a mobile device, a user terminal, a user agent, a user apparatus, or the like. The terminal device 110 may be deployed on land, including an indoor, outdoor, handheld, or vehicle-mounted device; may be deployed on the water (for example, a ship); or may be deployed in the air (for example, on an aircraft, a balloon, or a satellite). The terminal device 110 may be a cellular phone (cellular phone), a cordless telephone set, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device 110 may be a handheld device having a wireless communication function, a computing device, another device connected to a wireless modem, a vehicle-mounted device, a wearable device, an uncrewed aerial vehicle device, a terminal in an internet of things or an internet of vehicles, a terminal in any form in the 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device herein is a 3GPP terminal. A type or the like of the terminal device is not limited in embodiments of this application. For ease of description, in this application, an example in which UE represents a terminal device is used for description below.

The DN part may include a data network DN 140. The DN may also be referred to as a packet data network (packet data network, PDN), and is usually a network outside the operator network, for example, a third-party network. Certainly, in some implementations, the DN may be alternatively deployed by an operator, that is, the DN is a part of the PLMN. Whether the DN belongs to the PLMN is not limited in this application. The operator network PLMN may access a plurality of data networks DNs 140. The data network DN 140 may be deployed with a plurality of services, and may provide a data service, a voice service, and/or the like for the terminal device 110. For example, the data network DN 140 may be a private network of a smart factory, a sensor installed in a workshop of the smart factory may be the terminal device 110, a control server of the sensor is deployed in the data network DN 140, and the control server may provide a service for the sensor. The sensor may communicate with the control server, to obtain instructions of the control server, transmit collected sensor data to the control server according to the instructions, and the like. For another example, the data network DN 140 may be an internal office network of a company, a mobile phone or a computer of an employee of the company may be the terminal device 110, and the mobile phone or the computer of the employee may access information, data resources, and the like in the internal office network of the company. The terminal device 110 may establish a connection to the operator network through an interface (for example, N1) provided by the operator network, and use the data service, the voice service, and/or the like provided by the operator network. The terminal device 110 may further access the data network DN 140 through the operator network, and use an operator service deployed in the data network DN 140 and/or a service provided by a third party.

The operator network PLMN part may include but is not limited to a (radio) access network ((radio) access network, (R)AN) 120 and a core network (core network, CN) part.

The (R)AN 120 may be considered as a sub-network of the operator network, and is an implementation system between a service node in the operator network and the terminal device 110. To access the operator network, the terminal device 110 first passes through the (R)AN 120, and then may be connected to the service node in the operator network through the (R)AN 120. A device corresponding to the (R)AN 120 may be referred to as an access network device, a RAN device, or a network device, and can provide a wireless communication function for the terminal device 110. The access network device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmitting and receiving point, TRP), a transmitting point (transmitting point, TP), a small base station device (pico), a mobile switching center, a network device in a future network, or the like. It should be understood that a specific type of the access network device is not limited in this specification. In addition, in different radio access technologies, names of devices having a function of an access network device may be different. For ease of description, in all embodiments of this application, the foregoing apparatuses that provide a wireless communication function for the terminal device 110 are collectively referred to as access network devices, or referred to as RANs or ANs for short.

The CN part may include but is not limited to the following network functions (network functions, NFs): a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, a unified data repository (unified data repository, UDR) function 135, a network data analysis function (network data analytics function, NWDAF) 136, an authentication server function (authentication server function, AUSF) 137, an access and mobility management function (access and mobility management function, AMF) 138, a session management function (session management function, SMF) 139, and an application function (application function, AF) 141. It should be understood that any one of the foregoing network functions may also be referred to as a network element.

The following further briefly describes functions of the NFs included in the CN.
1. The UPF 130 is a gateway provided by the operator, and is a gateway for communication between the operator network and the data network DN 140. The UPF network function 130 includes user plane-related functions such as data packet routing and transmission, data packet detection, service usage reporting, quality of service (quality of service, QoS) handling, lawful interception, uplink data packet detection, and downlink data packet storage.
2. The NEF 131 is a control plane function provided by the operator, mainly enables a third party to use a service provided by a network, and supports the network in exposing a capability of the network, event and data analysis, providing security configuration information for a PLMN from an external application, conversion of information exchanged inside and outside the PLMN, and the like.
3. The NRF 132 is a control plane function provided by the operator, and may be configured to maintain real-time information of a network function and a service in a network. For example, the NRF 132 supports network service discovery, maintains services supported by NF configuration data (an NF profile) of NF instances, supports service discovery of a service communication proxy (service communication proxy, SCP), maintains SCP configuration data (an SCP profile) of SCP instances, sends notifications about newly registered, deregistered, and updated NFs and SCPs, maintains health statuses of NFs and SCP operations, and the like.
4. The PCF 133 is a control plane function provided by the operator, and supports a unified policy framework to govern network behavior and provide subscription information related to a policy rule and policy decision for another control function.
5. The UDM 134 is a control plane function provided by the operator, and is responsible for storing information such as a subscriber permanent identifier (subscriber permanent identifier, SUPI), a generic public subscriber identifier (generic public subscriber identifier, GPSI), and a credential (credential) of a subscriber in the operator network. The SUPI is first encrypted during transmission, and an encrypted SUPI is referred to as a subscription concealed identifier (subscription concealed identifier, SUCI) of a user. The information stored in the UDM network function 134 may be used for authentication and authorization for the terminal device 110 to access the operator network. The subscriber of the operator network may be specifically a user using a service provided by the operator network, for example, a user using a subscriber identity module (subscriber identity module, SIM) card of China Telecom or a user using a SIM card of China Mobile. The credential of the subscriber may be a long-term key stored in the SIM card, or a stored small file, for example, information related to encryption of the SIM card, and is used for authentication and/or authorization. It should be noted that the permanent identifier, the credential, a security context, authentication data (cookie), a token, and other information that are related to verification/authentication and authorization are not limited or distinguished between each other for ease of description in embodiments of this application.
6. The UDR 135 is a control plane function provided by the operator, and provides a function of storing and obtaining subscription data for the UDM, provides a function of storing and obtaining policy data for a PCF, stores and obtains NF group ID (group ID) information of a user, and the like.
7. The NWDAF 136 is a control plane function provided by the operator. A main function of the NWDAF 136 is to collect data from an NF, an external application function (application function, AF), an operation, administration and maintenance (operation, administration and maintenance, OAM) system, and the like, and provide the NF and the AF with NWDAF service registration, data exposure, data analysis, and the like.
8. The AUSF 137 is a control plane function provided by the operator, and is usually used for primary authentication, namely, authentication between the terminal device 110 (the subscriber) and the operator network. After receiving an authentication request initiated by the subscriber, the AUSF network function 137 may perform authentication and/or authorization on the subscriber by using authentication information and/or authorization information stored in the UDM network function 134, or generate authentication and/or authorization information of the subscriber by using the UDM network function 134. The AUSF network function 137 may feed back the authentication information and/or the authorization information to the subscriber.
9. The AMF 138 is a control plane network function provided by the operator network, and is responsible for access control and mobility management for the terminal device 110 to access the operator network, for example, including functions such as mobility status management, allocation of a temporary user identity, and user authentication and authorization.
10. The SMF 139 is a control plane network function provided by the operator network, and is responsible for managing a PDU session of the terminal device 110. The PDU session is a channel for transmission of a PDU, and the terminal device and the data network DN 140 need to perform transmission of PDUs to each other through the PDU session. The SMF network function 139 is responsible for establishment, maintenance, deletion, and the like of the PDU session. The SMF network function 139 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming.

It may be understood that the foregoing network elements or NFs may be physical entities in a hardware device, software instances running on dedicated hardware, or virtualized functions instantiated on a sharing platform (for example, a cloud platform). In short, an NF may be implemented by hardware or software. In addition, there may be one or more pieces of hardware (or software) for implementing all functions of an NF.

It should be understood that the AMF, the SMF, the UPF, the NEF, the AUSF, the NRF, the PCF, and the UDM shown in FIG. 1 may be understood as network elements configured to implement different functions in a core network. These network elements may be combined into a network slice as needed, and may be independent devices, or may be integrated into a same device to implement different functions. Specific forms of the network elements are not limited in this application.

It should be further understood that the names are defined merely for ease of distinguishing between different functions, and should not constitute any limitation on this application. This application does not exclude a possibility of using other names in a 5G network and another future network. For example, in the 6G network, some or all of the network elements may still use terms in 5G, or may use other names.

It should be further understood that Nnef, Nnrf, Npcf, Nudm, Nudr, Nnwdaf, Nausf, Namf, Nsmf, Neasdf, N1, N2, N3, N4, N6, and N9 in FIG. 1 are interface sequence numbers. For example, for meanings of the interface sequence numbers, refer to meanings defined in a 3GPP standard protocol. The meanings of the interface sequence numbers are not limited in this application. In addition, interface names between the network functions in FIG. 1 are merely examples. In a specific implementation, an interface name of a system architecture may be alternatively another name. This is not limited in this application.

The network architecture shown in FIG. 1 is used as an example. A general user registration procedure is roughly as follows. The UE sends a registration request to the AMF through the (R)AN. The AMF obtains subscription data from a specific UDM based on a user identifier. The UDM may obtain actual subscription data from the UDR after receiving the request. In addition, the AMF may send a user policy control creation request (UE PolicyControl_Create) and an access management policy control creation request (AM PolicyControl_Create) to the PCF to obtain a user policy and an access control policy of the UE, respectively. The PCF returns the corresponding policies to the AMF based on the requests, and the AMF provides the policies for the UE.

The network architecture shown in FIG. 1 is used as an example. A general session establishment procedure may be briefly described as follows. The UE sends a session establishment request to the AMF through the (R)AN. The AMF selects an SMF that provides a service for the session, stores a correspondence between the SMF and a PDU session, and sends the session establishment request to the SMF. The SMF selects a corresponding UPF for the UE, establishes a user plane transmission path, and allocates an internet protocol (Internet protocol, IP) address to the UE. In this process, the SMF may further initiate a policy control session establishment request to the PCF, to establish a policy control session between the SMF and the PCF. In a policy control session establishment process, the SMF stores a correspondence between the policy control session and the PDU session. In addition, the AF may establish an AF session with the PCF, and the PCF binds the AF session to the policy control session.

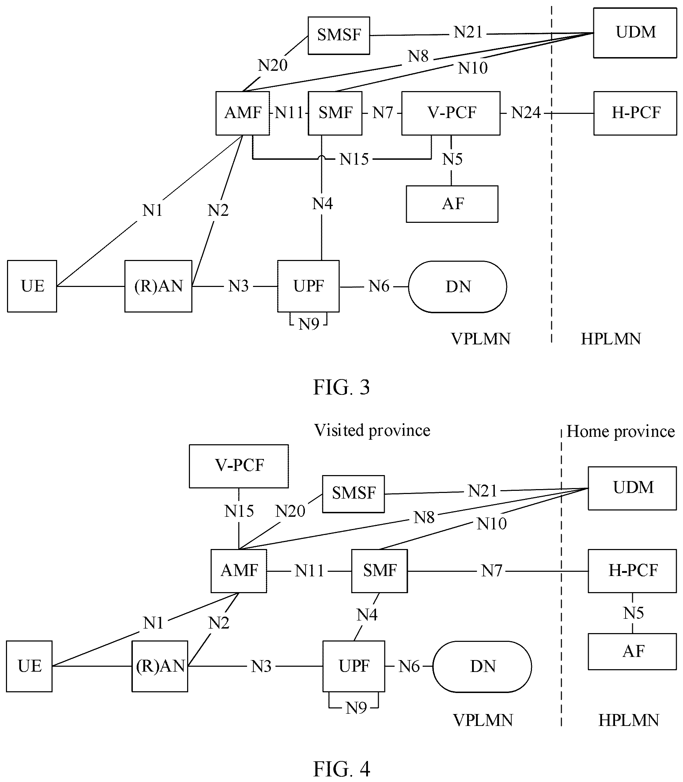

The current 3GPP standard defines two roaming scenarios in which a user accesses a visited public land mobile network (visited public land mobile network, VPLMN) at a visited location. The two roaming scenarios are specifically classified into two modes: home routed roaming (home routed roaming) and local breakout roaming (local breakout roaming), which respectively correspond to architectures described in FIG. 2 and FIG. 3. As shown in FIG. 2 and FIG. 3, in a roaming architecture, a PLMN is divided into a home public land mobile network (home public land mobile network, HPLMN) and a VPLMN. UE is a roaming subscriber, subscription information of the UE is in the HPLMN, and a location of the UE is currently located in the VPLMN.

FIG. 2 is a diagram of an architecture of a home routed roaming (Home routed Roaming).

As shown in FIG. 2, in the roaming architecture, UE accesses a DN through a visited RAN, a visited UPF (visited UPF, V-UPF), and a home UPF (home UPF, H-UPF). The AMF and the SMF are respectively located at a visited location and a home location. That is, a session management function is performed by a home SMF (home SMF, H-SMF) that supports interaction with UDM and a home PCF (home PCF, H-PCF). It should be understood that, in an actual scenario, an H-PCF connected to the visited PCF (visited-PCF, V-PCF) and an H-PCF connected to the H-SMF in FIG. 2 may be a same PCF entity, or may be different PCF entities.

FIG. 3 is a diagram of an architecture of local breakout roaming (Local Breakout Roaming).

As shown in FIG. 3, in the roaming architecture, UE accesses a visited DN through a visited RAN and a visited UPF. Both an AMF and an SMF are located at a visited location. That is, a session management function is performed by an SMF function entity at the visited location. A short message service function (short message service function, SMSF) interacts with the AMF through an N20 interface and interacts with a UDM through an N21 interface. It should be understood that, in an actual scenario, a V-PCF connected to the AMF and a V-PCF connected to the SMF in FIG. 3 may be a same PCF entity, or may be different PCF entities.

Currently, a domestic operator also uses an inter-province roaming architecture shown in FIG. 4. In the roaming architecture, both an AMF and an SMF are located in a visited province, and a V-PCF delivers a corresponding policy rule to the SMF in the visited province through an N7 interface. The AMF may obtain a corresponding access and mobility management policy (access and mobility management policy, AM policy) through the V-PCF deployed in the visited province.

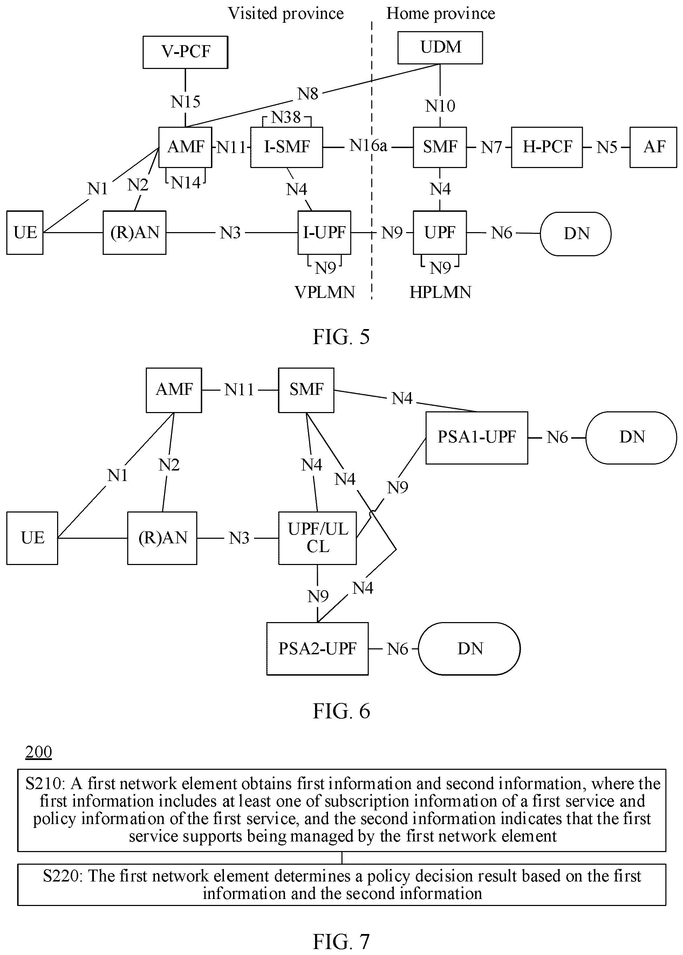

In an optional application scenario, the SMF and a UPF shown in FIG. 4 may also be replaced with an intermediate session management function network element I-SMF and an intermediate user plane network element I-UPF, and an SMF network element and a UPF network element are added to a home province. An SMF and a UPF deployed in the home province are responsible for performing a session management service for a session. For a diagram of a corresponding architecture, refer to FIG. 5. The I-SMF is mainly responsible for controlling the I-UPF based on corresponding information sent by the SMF.

The roaming architectures shown in FIG. 2 to FIG. 5 may be used for transmission of a public network service (such as daily internet access and a phone call). With evolution of a network service mode, in addition to subscribing to a public network service, a terminal device may further subscribe to a campus service for a specific region, for example, a guide service provided in a park or a museum for the park or the museum. To reduce an access delay of the campus service, a protocol further provides an uplink classifier (uplink classifier, UL CL)-based offloading architecture, as shown in FIG. 6.

FIG. 6 shows a UL CL-based offloading architecture to which this application is applicable. The architecture shown in FIG. 6 is located at a visited location, and UE is a roaming subscriber. As shown in FIG. 6, to reduce a service access delay, an operator may deploy a UPF node near a RAN. The UPF node includes a UPF/UL CL, a PDU session anchor (PDU session anchor, PSA)1-UPF, and a PSA2-UPF, so that a user can access an application service nearby. Specifically, a network at a visited location uses a UL CL manner, and a campus service flow and a public network service flow are directly routed to different data networks, for example, a campus internal service network and the internet through a UPF/UL CL. For example, a DN connected to the PSA2-UPF through an N6 interface may be the campus internal service network, and a DN connected to the PSA1-UPF through the N6 interface is the internet. The PSA1-UPF may be understood as a primary anchor UPF, and the PSA2-UPF may be understood as a secondary anchor UPF. Further, the DN connected to the PSA2-UPF through the N6 interface may also be connected to the internet, and the user may also access a service of the internet through the campus internal service network. The UE is unaware of the foregoing process, and a session management network element SMF determines the process based on a location of the UE, a type of a currently initiated service, campus service matching information, and the like.

It should be understood that in the architectures shown in FIG. 2 to FIG. 6, the network elements may alternatively communicate with each other through a service-based interface. For details, refer to descriptions in FIG. 1. For brevity, details are not described herein again.

In the roaming scenario, a terminal device is located at the visited location, and subscription information of the terminal device is located at a home location. Currently, there is no mechanism to support a visited network in subscribing to a campus service for a roaming terminal device.

In a possible implementation, subscription information of the campus service provided by the visited location is added to home subscription information of the terminal device. However, there may be a plurality of terminal devices that need to subscribe to the campus service, and this manner relates to a plurality of different home networks. Therefore, feasibility is relatively low.

Therefore, in a roaming scenario, how to manage the campus service of the terminal device becomes an urgent problem to be resolved.

Based on this, this application provides a communication method and a communication apparatus, to manage the campus service more effectively.

FIG. 7 is a schematic flowchart of a communication method according to an embodiment of this application. As shown in FIG. 7, the method includes the following steps.

S210: A first network element obtains first information and second information.

The first information includes at least one of subscription information of a first service and policy information of the first service.

In this application, the first service may also be referred to as a campus service, a region service, a private network service, a dedicated network service, a first-type service, or the like. The first service may be a service to business (to business, to B, 2B) or to consumer (to consumer, to C, 2C), that is, a customized service that a terminal device subscribes to in a specified location region. The specified location region may be referred to as a first region. That is, the first service supports access by the terminal device in the first region. Alternatively, when the terminal device is located in the first region, the terminal device can access the first service. Alternatively, the first service is a service the terminal device accesses in the first region. "Access" may also be understood as access.

In this application, the first region may be understood as a service region of the first service. For example, the first region is an enterprise campus, a scenic spot (for example, a park, a museum, or a theater), a school, a shopping mall, or the like.

It should be understood that the first service may be a service, or may be a general term of a type of service, which refers to a plurality of services.

A mapping relationship exists between the first network element and the first region. For example, a network element A may manage a first service in a region 1 and a region 2, and a network element B may manage a first service in a region 3. The network element A and the network element B may be separately considered as an example of the first network element, and the region 1, the region 2, and the region 3 may be separately considered as an example of the first region.

It should be understood that the first network element may manage a first service of one or more regions, and each region may provide one or more first services.

The first network element is a network element at a subscription location in which the terminal device subscribes to the first service.

Optionally, the first region includes a plurality of regions at different geographical locations.

For example, the first region is a service region of a campus service of an enterprise A. The campus service of the enterprise A may be provided in a city A and a city B. Therefore, the first region may include the city A and the city B.

In this application, a subscription location in which the terminal device subscribes to the first service may be understood as a location of a service region of the first service or an access location of the first service. For example, the subscription location of the first service is an administrative region such as a city or a province in which the first service is located.

It should be understood that there is a scenario in which a provider of a service subscribes to the service with an operator, so that all terminal devices that enter a service region of the service can access the first service without explicit subscription. In this application, that "the terminal device subscribes to the first service" may include a case in which the terminal device enters the service region of the first service without explicit subscription.

Optionally, in the scenario, a subscription location in which the terminal device subscribes to the first service may be understood as the access location in which the terminal device accesses the first service.

The subscription information of the first service may include at least one of the following:
(1) Information about the terminal device that is authorized to access the first service:
   For example, the subscription information uses a service as a granularity. For each service, there is a list that indicates a terminal device that is authorized to access the service. For another example, the subscription information uses a region as a granularity. For each region, there is a list that indicates at least one terminal device that is authorized to access a first service in the region. There may be one or more first services provided in the region. When a plurality of first services are provided in one region, it indicates that at least one terminal device in the list may access the plurality of first services.

It should be understood that "authorized to access the first service" and "allowed to access the first service" may be understood as subscribing to the first service.

(2) Information about the first service that the terminal device subscribes to:
For example, the subscription information uses a terminal device as a granularity. For each terminal device, there is a list that indicates at least one first service that the terminal device subscribes to.

(3) Network information corresponding to the first service that the terminal device subscribes to: The network information may be a data network name (data network name, DNN) or single network slice selection assistance information (single network slice selection assistance information, S-NSSAI). For example, the subscription information uses a DNN as a granularity. For each DNN, there is a list that indicates at least one terminal device that subscribes to a first service corresponding to the DNN. For another example, the subscription information uses S-NSSAI as a granularity. For each piece of S-NSSAI, there is a list that indicates at least one terminal device that subscribes to a first service corresponding to the S-NSSAI.

It should be understood that a relationship between the DNN and the first service is that the UE may associate the first service with the DNN based on local configuration information or a UE policy, and then access the first service through the DNN. Similarly, a relationship between the S-NSSAI and the first service is that the UE may associate the first service with the S-NSSAI based on the local configuration information or the UE policy, and then access the first service through the S-NSSAI. In other words, there is a correspondence between the DNN or the S-NSSAI and the first service.

(4) Subscription usage quota information of the first service: The subscription information uses a service as a granularity. For each first service, the subscription information includes a data plan of the first service, a quota plan when a plurality of terminal devices simultaneously access the first service, and the like.

In this application, the policy information of the first service may include at least one of the following:
(1) Terminal device policy (UE policy) of the first service: For example, a UE route selection policy (UE route selection policy, URSP) or an access network discovery and selection policy (access network discovery and selection policy, ANDSP), where the URSP may be used for indicating that the UE determines a target packet data unit (packet data unit, PDU) session parameter when accessing the first service, for example, information such as a DNN, S-NSSAI, a session and service continuity (session and service continuity, SSC) mode (mode), an access type (access type), and a PDU session type (PDU session type). The ANDSP may be used for assisting the terminal device in selecting a non-3GPP (non-3GPP) network corresponding to the first service.
(2) Access and mobility management policy (access and mobility management policy, AM policy) of the first service, for example, a radio access technology (radio access technology, RAT)/frequency selection priority (RAT/frequency selection priority, RFSP) policy or service area restriction (service area restriction) information, used for assisting the terminal device in selecting an access frequency matching the first service, or performing service access with reference to a service area restriction matching the first service.
(3) Session management policy (access and mobility management policy, AM policy) of the first service: For example, a session policy includes, a session parameter that can be authorized for use, such as a quality of service (quality of service, QoS) policy, a charging policy, a data offloading policy, a DNN, or S-NSSAI.

The access and mobility management policy may be briefly referred to as an AM policy, and the session management policy may be briefly referred to as an SM policy.

The first information may be from a second network element. The second network element is a network element at a subscription location in which the terminal device subscribes to the first service.

For example, the second network element may be an AF, a UDR, or a business and operation support system (business & operation support system, BOSS) of an operator. The AF, the UDR, and the BOSS are all located at a subscription location of the terminal device. For example, the AF is an application function network element corresponding to the first service, and is responsible for initiating a service request for the first service. The UDR is a subscriber data management network element in a current access location of the UE, and supports maintenance of the subscription information and/or the policy information corresponding to the first service. The BOSS is an operation support system in the current access location of the UE, and supports configuration of the service request corresponding to the first service for the UDR or the first network element.

Optionally, the second network element is different from the first network element.

Optionally, the second network element and the first network element may be combined. In this case, that "the first network element obtains the first information" may be understood as an internal action of the first network element. For example, the first network element reads information stored in the first network element to obtain the first information.

The second information indicates that the first service supports being managed by the first network element.

In an example, the second information may be an identifier of the first service, for example, in the form of a name, an application identifier, a domain name, or an FQDN of the first service.

In another example, the second information is an authorization indication of the first service, for example, a flag indication.

In still another example, the second information is network information corresponding to the first service, for example, a DNN or S-NSSAI corresponding to the first service.

It should be understood that the second information may be included in service authorization information. The service authorization information may indicate that a service supports being managed by the first network element. In other words, the service that supports being managed by the first network element includes the first service.

The second information is from a third network element. The third network element is a home data storage network element of the terminal device.

For example, the third network element is a UDR, UDM, or a PCF. The UDR, the UDM, and the PCF are all located at a home location of the terminal device.

In this application, the second information indicates that the first service supports being managed by the first network element, and the second information is from the home data storage network element of the terminal device. It may be understood that the home network element of the terminal device authorizes the first network element to manage the first service, or the home network element of the terminal device allows the first network element to manage the first service.

S220: The first network element determines a policy decision result based on the first information and the second information.

The policy decision result may be used by the terminal device to access the first service in the first region.

For example, the policy decision result may include the UE policy, for example, the URSP or the ANDSP.

For example, the policy decision result may further include the AM policy and the SM policy.

Because the SM policy may be used for session establishment of the terminal device, and a session may be used for transmission of the first service, the policy decision result may be further used by the terminal device for transmission of data of the first service in the first region.

It should be understood that the policy information of the first service in first service information may be understood as a candidate policy set of the first service, and the candidate policy set includes an applicable scenario of each policy. The policy decision result determined by the first network element may be understood as a policy applicable to the terminal device to access the first service in the first region. The policy decision result may be a subset of the policy information.

Based on the foregoing solution, the first network element may obtain the first information from the second network element, obtain the second information from the third network element, and determine the policy decision result of the terminal device based on the first information and the second information. Because the policy decision result is determined by the first network element at a subscription location in which the terminal device subscribes to the first service, the network element at the subscription location may manage the first service. In this way, load of a home network element can be reduced, and a delay for which the terminal device accesses the first service can be reduced. In addition, because the first network element determines the policy decision result based on authorization of the home data storage network element of the terminal device, the first network element can prevent the first network element from offloading, at an access location, some or all services, to ensure communication security.

In conclusion, the solution of this application can manage the first service more effectively.

In an implementation, the first information includes the subscription information.

In the implementation, that the first network element determines the policy decision result based on the first information and the second information in S220 includes: The first network element determines, based on the subscription information, that the terminal device subscribes to the first service, and determines, based on the second information, that the first service supports being managed by the first network element and the policy decision result.

For example, the subscription information is information about the terminal device that is authorized to access the first service. Therefore, the first network element may learn, based on the subscription information, that the terminal device subscribes to the first service.

For another example, the subscription information includes subscription usage quota information. Based on an event of the first service initiated by the terminal device and an identifier of a target terminal device (for example, identity information such as an IP address, a GPSI, or an SUPI) of the first service that is carried by an application side by using a signaling message, when the identifier of the target terminal device includes the terminal device that initiates the first service, it may be determined that the terminal device that initiates the first service subscribes to the first service.

For example, the second information is the DNN or the S-NSSAI corresponding to the first service. The first network element may determine, based on the DNN or the S-NSSAI, that the first network element can manage the first service.

In addition, the first network element may further determine the policy decision result based on the DNN or the S-NSSAI.

Specifically, the policy decision result determined based on the DNN or the S-NSSAI may be that the first network element determines, based on the authorized DNN/S-NSSAI in the second information, DNN/S-NSSAI information that may be used by the terminal device when the terminal device accesses the first service, and then generates a corresponding policy rule.

In another implementation, the first information includes the policy information.

In the implementation, that the first network element determines the policy decision result based on the first information and the second information in S220 includes: The first network element determines, based on the second information, that the first service supports being managed by the first network element; and determines the policy decision result based on the policy information.

For example, the second information is an identifier of the first service. The first network element may determine, based on the identifier, that the first network element can manage the first service.

For example, the policy information is a candidate AM policy. The policy decision result determined based on the policy information may be an AM policy applicable to the terminal device to access the first service in the first region.

It should be understood that, in the implementation, the first service may be a preconfigured service of the terminal device. Therefore, the first network element may not need to determine whether the terminal device subscribes to the first service.

In another implementation, the first information includes the subscription information and the policy information.

In the implementation, that the first network element determines the policy decision result based on the first information and the second information in S220 includes: The first network element determines, based on the subscription information, that the terminal device subscribes to the first service, determines, based on the second information, that the first service supports being managed by the first network element, and determines the policy decision result based on the policy information.

For example, the subscription information is the information about the first service that the terminal device subscribes to. Therefore, the first network element may learn, based on the subscription information, that the terminal device subscribes to the first service.

For example, the second information is the authorization indication of the first service. The first network element may determine, based on the authorization indication, that the first network element can manage the first service.

For example, the policy information is a candidate UE policy. The policy decision result determined based on the policy information may be a UE policy applicable for the terminal device to access the first service in the first region.

Optionally, a method 200 further includes: An application function sends fourth information to a fourth network element.

The fourth information includes region information, and subscription information and/or policy information of a plurality of services. The region information includes the first region, and the plurality of services include the first service.

It should be understood that the fourth information may be carried in a service request message of the application function.

A mapping relationship exists between the first network element and the first region, and the first service is a service the terminal device accesses in the first region.

The region information may be geographical region information, or identification information such as a province or a region.

For example, the region information includes a region 1, a region 2, and a region 3. The region 1 is a service region of a service 1, the region 2 is a service region of a service 2, and the region 3 is a service region of a service 3. Mapping relationships exist between a network element A and both the region 1 and the region 2, and a mapping relationship exists between the region 3 and a network element B. In other words, the network element A may manage the service 1 and the service 2, and the network element B may manage the service 3. The subscription information and/or the policy information of the plurality of services may be subscription information and/or policy information of the service 1, the service 2, and the service 3. The region 1, the region 2, and the region 3 may be separately considered as an example of the first region, the service 1, the service 2, and the service 3 may be separately considered as an example of the first service, and the network element A and the network element B may be separately considered as an example of the first network element.

Optionally, the fourth network element may be a network element at the subscription location in which the terminal device subscribes to the first service.

For example, the fourth network element is a NEF, and the NEF is located at a subscription location.

Therefore, based on the mapping relationship, the fourth network element may send the first information to the first network element. The first information includes the subscription information and/or the policy information of the first service.

In other words, the fourth network element may deliver, based on a service request of the AF, the subscription information and/or the policy information of the plurality of first services to the first network element that manages the service, and the first network element determines the policy decision result.

Based on the foregoing solution, the fourth network element delivers subscription information and/or policy information of a plurality of first services to first network elements that manage the services, so that each first network element can determine a corresponding policy decision result, and the network element at the subscription location may manage the first service. This can reduce load of a home network element, and can reduce a delay for which the terminal device accesses the first service.

Optionally, the method 200 further includes: The fourth network element sends fifth information to a network repository function (NRF). The fifth information is used for requesting the mapping relationship.

Specifically, before S210, one or more first network elements may register, in the NRF, a list of regions served by the first network elements, and the NRF may store a mapping relationship between the first network element and a service region of the first network element, so that the fourth network element may query the NRF for the mapping relationship.

Optionally, the mapping relationship may be preconfigured information of the fourth network element. In other words, the mapping relationship is preconfigured on the fourth network element.

Optionally, that the first network element obtains the first information and the second information in S210 includes: The first network element receives the first information from the second network element, and receives the second information from the third network element.

Optionally, the method 200 further includes: The first network element sends the third information to the third network element. The third information is used for requesting service authorization information.

Specifically, the first network element may request, from the third network element, the first service that can be managed by the first network element.

Optionally, that the first network element receives the second information may mean that the first network element receives the service authorization information from the third network element. The service authorization information includes the second information.

For example, the service authorization information may be an identifier (for example, a name) of the service that supports being managed by the first network element, an authorization indication (for example, a flag indication) of the service supports being managed by the first network element, and network information (for example, a DNN or S-NSSAI) corresponding to the service that supports being managed by the first network element

Based on the foregoing solution, the service authorization information may be uniformly managed by the home data storage network element of the terminal device, so that communication security of the terminal device can be ensured.

Optionally, the method 200 further includes: A first node sends the policy decision result to a control plane network element and/or the terminal device.

For example, the control plane network element may be an SMF or an AMF. Further, the AMF may enable, based on the policy decision result, the terminal device to access the first service. Alternatively, the SMF may establish a session, for example, a PDU session, for the terminal device based on the policy decision result, and perform transmission of the first service based on the PDU session.

Optionally, the method 200 further includes: The first network element sends sixth information to a fifth network element. The sixth information indicates that the first network element is configured to manage the first service of the terminal device, and the fifth network element is configured to store an association relationship between the terminal device and the first network element.

Specifically, there may be a plurality of first network elements. Each first network element is configured to manage a first service in a service region of the first network element. Therefore, each first network element may send the sixth information to the fifth network element, to indicate a management relationship between the first network element and the terminal device, so that the fifth network element may store the association relationship between the terminal device and the first network element. Further, when downlink information of the terminal device exists, the fifth network element may route the downlink information to the terminal device by using the first network element.

For example, the fifth network element is a binding support function (binding support function, BSF) network element or the third network element.

Based on the foregoing solution, in this application, the management relationship between the terminal device and the first network element can be established, to ensure communication performance of downlink communication.

The following uses application scenarios of this application as an example for description. For example, this application is applicable to the following scenarios.
(1) High-speed railway station scenario: A cloud game vendor can sign a contract with an operator to provide a local cloud game service for all users of China Mobile/China Unicom/China Telecom. In the scenario, the first network element may be deployed in a high-speed railway station by using a cloud game, and a user may access a cloud game intranet in the high-speed railway station, to shorten a service access delay and improve user experience. It should be understood that, in the scenario, the user may not need to participate in a service subscription procedure, and all users entering a region may be authorized to access a cloud game service.
(2) Scenic spot (such as a museum) scenario: An intranet server (an example of the first network element) may be deployed locally in a scenic spot to provide an intranet application. A user may sign a contract with an operator based on a local value-added service provided by the scenic spot and the operator in collaboration, and then a network side delivers an access policy corresponding to the local value-added service, to implement differentiated service experience/quality of service assurance. In the scenario, the user in the scenic spot may access the intranet server of the scenic spot, to reduce a communication delay.

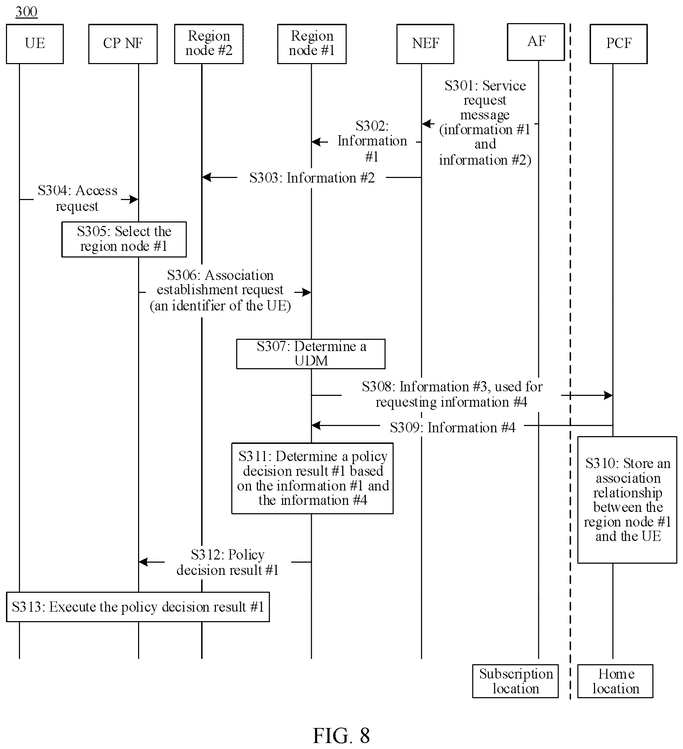

FIG. 8 is another schematic flowchart of a communication method according to an embodiment of this application. A method 300 shown in FIG. 8 may be considered as a specific implementation of the method 200. The method 300 may include the following steps.

S301: An AF (an example of a second network element) sends a service request message to a NEF (an example of a fourth network element).

The service request message may include information #0 (an example of fourth information).

The information #0 includes region information, and subscription information and policy information of a plurality of services.

For example, the region information includes a region 1, a region 2, and a region 3. The region 1 is a service region of a service 1, the region 2 is a service region of a service 2, and the region 3 is a service region of a service 3. Mapping relationships exist between a region node #1 (an example of a first network element) and both the region 1 and the region 2 and, and a mapping relationship exists between the region 3 and a region node #2 (another example of the first network element). In other words, the region node #1 may manage the service 1 and the service 2, and the region node #2 may manage the service 3. The subscription information and the policy information of the plurality of services may be subscription information and policy information of the service 1, the service 2, and the service 3.

S302: The NEF sends information #1 (an example of first information) to the region node #1.

The NEF may send the subscription information and the policy information (that is, the information #1) of the service 1 and the service 2 to the region node #1 based on a mapping relationship between a region and a region node.

S303: The NEF sends information #2 (another example of the first information) to the region node #2.

The NEF may send the subscription information and policy information (that is, the information #2) of the service 3 to the region node #2 according to the mapping relationship between the region and the region node.

S304: UE (an example of a terminal device) sends an access request to a control plane network function (control plane network function, CP NF).

For example, an access request may be a registration request, or may be a PDU session establishment request. Correspondingly, the CP NF may be a corresponding network element responsible for processing the request message, for example, an AMF or an SMF.

The access request may carry an identifier of the UE, a location of the UE, and the like. For example, the UE is located in the region 1.

S305: The CP NF determines the region node #1.

The CP NF may determine a corresponding region node based on the location of the UE. For example, the CP NF determines, on the basis that the UE is located in the region 1, the region node #1 corresponding to the region 1, and a region node #1 determines that corresponding service subscription information exists locally.

S306: The CP NF initiates an association establishment request to the region node #1.

The association establishment request may include the identifier of the UE, the location of the UE, information about a network that the UE requests to access, and the like.

S307: The region node #1 determines a PCF (an example of a third network element).

The region data node #1 may determine a home node of the UE based on the association establishment request. For example, the region data node #1 may determine, based on the identifier of the UE, a home node corresponding to the UE, for example, the PCF.

S308: The region node #1 sends information #3 (an example of the third information) to the PCF.

The information #3 is used for requesting a service that supports being managed by the region node #1.

S309: The PCF sends information #4 (an example of service authorization information) to the region node #1.

The information #4 includes a service that supports being managed by the region node #1, for example, includes the service 1 and the service 2.

S310: The PCF stores an association relationship between the region node #1 and the UE.

In addition to sending the information #4 to the region node #1, the PCF may further store the association relationship between the region node #1 and the UE, indicating that the region node #1 is configured to manage a service of the UE.

S311: The region node #1 determines a policy decision result #1 based on the information #1 and the information #4.

For example, the region node #1 may determine, based on the information #4, that the region node #1 can manage the service 1 and the service 2.

For example, the region node #1 may determine, based on subscription information in the information #1, that the UE subscribes to the service 1 and the service 2, and determine, based on the location of the UE, that the UE is currently located in the service region (that is, the region 1) of the service 1. Further, the region node #1 determines the policy decision result #1 for accessing a service 1 for the UE based on policy information about the service 1 in the information #1.

S312: The region node #1 sends the policy decision result #1 to the CP NF.

S313: The CP NF and the UE execute the policy decision result #1.

For example, the CP NF completes registration of the UE based on the policy decision result #1, for accessing the service 1. Alternatively, the CP NF completes the PDU session establishment of the UE, to perform transmission of the service 1 by using a PDU session.

It should be understood that interaction between the UE and the CP NF may be implemented through a RAN (not shown in FIG. 8).

It should be further understood that the method 300 is merely an example of a specific implementation of the method 200. For details that are not described in the method 300, refer to the method 200. Details are not described herein again.

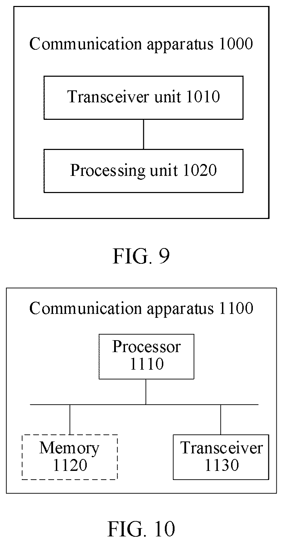

Communication method side embodiments in this application are described above in detail with reference to FIG. 1 to FIG. 8. Terminal device side embodiments in this application are described below in detail with reference to FIG. 9 and FIG. 10. It should be understood that descriptions of the apparatus embodiments correspond to the descriptions of the method embodiments. Therefore, for a part that is not described in detail, refer to the foregoing method embodiments.

FIG. 9 is a diagram of a communication apparatus 1000 according to an embodiment of this application.

The apparatus 1000 includes a transceiver unit 1010 and a processing unit 1020. The transceiver unit 1010 may be configured to implement a corresponding communication function. The transceiver unit 1010 may also be referred to as a communication interface or a communication unit. The processing unit 1020 may be configured to perform data processing.

Optionally, the apparatus 1000 further includes a storage unit. The storage unit may be configured to store instructions and/or data. The processing unit 1020 may read the instructions and/or the data in the storage unit, to enable the apparatus to implement actions of different devices in the foregoing method embodiments, for example, actions of the first network element, the second network element, the third network element, and the fourth network element.

In an example, the apparatus 1000 is configured to perform actions performed by the first network element (for example, the region node #1) in the foregoing method embodiments. The apparatus 1000 may include units configured to perform the methods performed by the first network element (for example, the region node #1) in the foregoing method embodiments.

In this case, the apparatus 1000 may be a component of the first network element (for example, the region node #1). The transceiver unit 1010 is configured to perform receiving and sending-related operations of the first network element (for example, the region node #1) in the foregoing method embodiments (for example, the method 200 and the method 300). The processing unit 1020 is configured to perform processing-related operations of the first network element (for example, the region node #1) in the foregoing method embodiments (for example, the method 200 and the method 300).

The apparatus 1000 may implement corresponding steps or procedures performed by the first network element (for example, the region node #1) according to the method embodiments in embodiments of this application.

It should be understood that a specific process in which the units perform the foregoing corresponding steps is described in detail in the foregoing method embodiments. For brevity, details are not described herein.

In an example, the apparatus 1000 is configured to perform actions performed by the fourth network element (for example, the NEF) in the foregoing method embodiments. The apparatus 1000 may include units configured to perform the methods performed by the fourth network element (for example, the NEF) in the foregoing method embodiments.

In this case, the apparatus 1000 may be the fourth network element (for example, the NEF) and a component of the fourth network element. The transceiver unit 1010 is configured to perform receiving and sending-related operations of the fourth network element (for example, the NEF) in the foregoing method embodiments (for example, the method 200 and the method 300). The processing unit 1020 is configured to perform processing-related operations of the fourth network element (for example, the NEF) in the foregoing method embodiments (for example, the method 200 and the method 300).

The apparatus 1000 may implement corresponding steps or procedures performed by the fourth network element (for example, the NEF) according to the method embodiments in embodiments of this application.

It should be understood that a specific process in which the units perform the foregoing corresponding steps is described in detail in the foregoing method embodiments. For brevity, details are not described herein.

It should be further understood that the apparatus 1000 is presented in the form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The apparatus 1000 in each of the foregoing solutions has a function of implementing a corresponding step performed by the first network element (for example, the region node #1) in the foregoing method, or the apparatus 1000 in each of the foregoing solutions has a function of implementing a corresponding step performed by the fourth network element (for example, the NEF) in the foregoing method. The function may be implemented by hardware, or may be implemented by executing corresponding software by using hardware. The hardware or the software includes one or more modules corresponding to the foregoing functions. For example, the transceiver unit may be replaced by a transceiver (for example, a sending unit in the transceiver unit may be replaced by a transmitter machine, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit 1010 may alternatively be a transceiver circuit (for example, the transceiver circuit may include a receiver circuit and a transmitter circuit), and the processing unit may be a processing circuit.

It should be noted that the apparatus 1000 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 10 is a diagram of another communication apparatus 1100 according to an embodiment of this application. As shown in FIG. 10, the apparatus 1100 includes a processor 1110 and a transceiver 1130. The processor 1110 is configured to control the transceiver 1130 to receive and/or send a signal, to perform the method in the foregoing method embodiments. Optionally, as shown in FIG. 10, the apparatus 1100 further includes a memory 1120. The memory 1120 is configured to store a computer program or instructions and/or the data. For example, the processor 1110 may be coupled to the memory 1120. The processor 1110 is configured to execute the computer program or the instructions stored in the memory 1120, or read the data stored in the memory 1120, to implement the method in the foregoing method embodiments.

Optionally, there are one or more processors 1110.

Optionally, there are one or more memories 1120.

Optionally, the memory 1120 and the processor 1110 are integrated together or separately disposed.

The apparatus 1100 is configured to implement operations performed by the first network element (for example, the region node #1) or the fourth network element (for example, the NEF) in the foregoing method embodiments.

For example, the processor 1110 is configured to execute the computer program or the instructions stored in the memory 1120, to implement related operations performed by the first network element (for example, the region node #1) in the foregoing method embodiments, for example, the method performed by the first network element in the embodiment shown in FIG. 7, or the method performed by the region node #1 in the embodiment shown in FIG. 8.

For another example, the processor 1110 is configured to execute the computer program or the instructions stored in the memory 1120, to implement related operations performed by the fourth network element (for example, the NEF) in the foregoing method embodiments, for example, the method performed by the fourth network element in the embodiment shown in FIG. 7, or the method performed by the NEF in the embodiment shown in FIG. 8.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any another appropriate type of memories.

This application further provides a computer-readable medium, storing a computer program. When the computer program is executed by a computer, a function of any one of the foregoing method embodiments is implemented.

This application further provides a computer program product. When the computer program product is executed by a computer, a function of any one of the foregoing method embodiments is implemented.

This application further provides a communication system, including the first network element and the fourth network element in the foregoing embodiments. Optionally, the communication system may further include the second network element and the third network element in the foregoing embodiments.

All or some of the foregoing embodiments may be implemented by using software, hardware, firmware, or any combination thereof. When software is used to implement the embodiments, all or some of the embodiments may be implemented in the form of a computer program product. The computer program product includes one or more computer instructions. When the computer instructions are loaded and executed on a computer, the procedures or functions based on embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state disk (solid-state disk, SSD)), or the like.

In embodiments of this application, the term such as "example" or "for example" is for representing giving an example, an illustration, or descriptions. Any embodiment or design solution described as an "example" in this application should not be explained as being more preferred or having more advantages than another embodiment or design solution. Exactly, the term "example" is for presenting a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that, in various embodiments of this application, sequence numbers of the foregoing processes do not mean execution sequences. The execution sequences of the processes should be determined based on functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when", "if", and "if" mean that UE or a base station performs corresponding processing in an objective situation, and are not intended to limit time, and the UE or the base station is not necessarily required to have a determining action during implementation, and do not mean other limitation.

It should be noted that, in embodiments of this application, "presetting", "preconfiguring", or the like may be implemented by prestoring corresponding code or a table in a device (for example, a terminal device), or in another manner that may indicate related information. A specific implementation of "presetting", "preconfiguring", or the like is not limited in this application, for example, a preset rule or a preset constant in embodiments of this application.

In addition, the terms "system" and "network" may be used interchangeably in this specification.

The term "at least one of ..." or "at least one of ..." in this specification indicates all or any combination of the listed items. For example, "at least one of A, B, or C" may indicate the following six cases: Only A exists, only B exists, only C exists, both A and B exist, both B and C exist, and A, B, and C all exist. In this specification, "at least one" indicates one or more. "A plurality of" means two or more.

It should be understood that, in various embodiments of this application, "B corresponding to A" indicates that B is associated with A, and B may be determined based on A. However, it should be further understood that determining B based on A does not mean that B is determined only based on A. B may alternatively be determined based on A and/or other information. The terms "comprise", "include", "have", and their variants all mean "include but not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in the form of a software product. The computer software product is stored in a storage medium, and includes a plurality of instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a first network element, first information and second information, wherein the first information comprises subscription information of a first service and/or policy information of the first service, the second information indicates that the first service supports being managed by the first network element, the first information is from a second network element, the second information is from a third network element, the second network element is a network element at a subscription location in which a terminal device subscribes to the first service, and the third network element is a home data storage network element of the terminal device; and
determining, by the first network element, a policy decision result based on the first information and the second information, wherein the policy decision result is used by the terminal device to access the first service in a first region, a mapping relationship exists between the first region and the first network element, and the first network element is a network element at the subscription location in which the terminal device subscribes to the first service.

2. The method according to claim 1, wherein the first information comprises the subscription information, and the determining, by the first network element, a policy decision result based on the first information and the second information comprises:
determining, by the first network element based on the subscription information, that the terminal device subscribes to the first service; and
determining, by the first network element based on the second information, that the first service supports being managed by the first network element, and determining the policy decision result based on the second information.

3. The method according to claim 1, wherein the first information comprises the policy information, and the determining, by the first network element, a policy decision result based on the first information and the second information comprises:
determining, by the first network element based on the second information, that the first service supports being managed by the first network element; and
determining, by the first network element, the policy decision result based on the policy information.

4. The method according to claim 1, wherein the first information comprises the subscription information and the policy information, and the determining, by the first network element, a policy decision result based on the first information and the second information comprises:
determining, by the first network element based on the subscription information, that the terminal device subscribes to the first service; and
determining, by the first network element based on the second information, that the first service supports being managed by the first network element; and
determining, by the first network element, the policy decision result based on the policy information.

5. The method according to claim 2 or 4, wherein a granularity of the subscription information is any one of the following:
a terminal granularity, a region granularity, a data network name granularity, a single network slice selection assistance information granularity, or a service granularity.

6. The method according to claim 3 or 4, wherein the policy information comprises at least one of the following: an access and mobility management policy, a session management policy, or a terminal device policy.

7. The method according to any one of claims 1 to 6, wherein the method further comprises:
sending, by the first network element, third information to the third network element, wherein the third information is used for requesting service authorization information, and the service authorization information indicates a service that supports being managed by the first network element; and
receiving, by the first network element, the second information comprises:
receiving, by the first network element, the service authorization information from the third network element, wherein the service authorization information comprises the second information.

8. The method according to claim 7, wherein the service authorization information is at least one of the following:
an identifier of a service that supports being managed by the first network element, an authorization indication of a service that supports being managed by the first network element, or network information corresponding to a service that supports being managed by the first network element.

9. The method according to any one of claims 1 to 8, wherein the first region comprises a plurality of regions of different geographical locations.

10. The method according to any one of claims 1 to 9, wherein the policy decision result is further used by the terminal device for transmission of data of the first service in the first region.

11. A communication method, comprising:
receiving fourth information from an application function, wherein the fourth information comprises region information, and subscription information and/or policy information of a plurality of services, the region information comprises a first region, the plurality of services comprise a first service, the first service is a service a terminal device accesses in the first region, a mapping relationship exists between the first region and a first network element, and the first network element is a network element at a subscription location in which the terminal device subscribes to the first service; and
sending first information to the first network element based on the mapping relationship, wherein the first information comprises subscription information and/or policy information of the first service.

12. The method according to claim 11, wherein the method further comprises:
sending fifth information to a network repository function, wherein the fifth information is used for requesting the mapping relationship.

13. A communication method, comprising:
sending, by an application function, fourth information to a fourth network element, wherein the fourth information comprises region information, and subscription information and/or policy information of a plurality of services, the region information comprises a first region, the plurality of services comprise a first service, the first service is a service a terminal device accesses in the first region, a mapping relationship exists between the first region and a first network element, and the first network element is a network element at a subscription location in which the terminal device subscribes to the first service;
sending, by the fourth network element, first information to the first network element based on the mapping relationship, wherein the first information comprises subscription information and/or policy information of the first service;
sending, by a third network element, second information to the first network element, wherein the second information indicates that the first service supports being managed by the first network element, and the third network element is a home data storage network element of the terminal device; and
determining, by the first network element, a policy decision result based on the first information and the second information, wherein the policy decision result is used by the terminal device to access the first service in the first region.

14. A communication apparatus, comprising a unit configured to implement the method according to any one of claims 1 to 10, or comprising a unit configured to implement the method according to claim 11 or 12.

15. A communication apparatus, comprising a processor, wherein the processor is coupled to a memory, and the processor is configured to execute a computer program stored in the memory, to enable the apparatus to perform the method according to any one of claims 1 to 10, or the apparatus to perform the method according to claim 11 or 12.

16. A computer-readable storage medium, wherein the computer-readable storage medium stores a computer program, and when the computer program is run, a computer is enabled to perform the method according to any one of claims 1 to 10, or a computer is enabled to perform the method according to claim 11 or 12.

17. A computer program product, wherein when the computer program product is executed by a communication apparatus, the method according to any one of claims 1 to 10 or the method according to claim 11 or 12 is implemented.
